# EUROPÄISCHE PATENTSCHRIFT

(11) **EP 1 987 974 B1**
(45) Veröffentlichungstag und Bekanntmachung des Hinweises auf die Patenterteilung: **31.03.2010**
(21) Anmeldenummer: 08007919.7
(22) Anmeldetag: 24.04.2008
(51) Int. Cl.: B60J 7/00, B60R 13/02

(54) **Verdeck eines Cabriolets**
Roof for a cabriolet
Capote d'un cabriolet

(30) Priorität: 03.05.2007 DE 102007020771
(43) Veröffentlichungstag der Anmeldung: 05.11.2008
(73) Patentinhaber: Webasto AG, 82131 Stockdorf (DE)
(72) Erfinder: Finckh, Cornelia, 82131 Stockdorf (DE)

(56) Entgegenhaltungen:
- EP-A- 1 384 610
- WO-A-2008/031415

## Beschreibung

Die Erfindung betrifft ein Verdeck eines Cabriolets mit den Merkmalen des Oberbegriffs des Patentanspruchs 1. Ein solches Verdeck ist aus dem Dokument WO 2008/031415 A bekannt.

Ein derartiges Verdeck ist aus der Praxis bekannt und umfasst neben mindestens einem starren Verdeckelement eine Innenverkleidung, die zumindest das starre Verdeckelement innenseitig überspannt und zumindest bereichsweise faltbar ausgeführt ist. Die Steuerung der faltbaren Bereiche kann mittels Seilen erfolgen. Beispielsweise weist die Innenverkleidung mindestens einen zentralen, in Schließstellung des Verdecks im Wesentlichen waagrecht angeordneten, an das Verdeckelement angebundenen Stoffzuschnitt auf, der an einem plattenartigen Kunststoffteil oder dergleichen aufgespannt ist und über Rastverbindungen an das Verdeckelement angebunden ist. An diesen zentralen Stoffzuschnitt grenzen seitlich segelartige, seitliche Stoffzuschnitte, die in Schließstellung des Verdecks Dachseitenholme und/oder Verdeckgestänge überspannen, so dass sich eine optisch anmutende, die Betätigungselemente des Verdecks überdeckende Innenverkleidung des Verdecks ergibt. Die seitlichen Stoffzuschnitte sind jeweils entlang eines im Wesentlichen in Fahrzeugslängsrichtung verlaufenden Randes über eine Naht mit dem zentralen Stoffzuschnitt verbunden und in Schließstellung des Verdecks mittels Seilen gespannt gehalten. Wenn nun bei einem Verdeck mit mehreren starren Verdeckelementen beim Öffnen des Verdecks ein hinteres Verdeckelement über ein vorderes Verdeckelement geschwenkt werden soll, besteht das Risiko, dass starke Spannungen im Bereich der Stoffzuschnitte auftreten, so dass das Risiko eines Reißens besteht. Daher muss die Kinematik des Verdecks so auf die Innenverkleidung abgestimmt sein, dass durch die Seile zur Steuerung des Innenhimmels die Stoffzuschnitte hinreichend entspannt und nachgeführt werden. Dies ist aber nicht immer in hinreichendem Maße möglich.

Der Erfindung liegt die Aufgabe zugrunde, ein gemäß der einleitend genannten Gattung ausgebildetes Verdeck eines Cabriolets bereitzustellen, bei dem eine flexible Steuerung von mittels Seilen gesteuerten, seitlichen Stoffzuschnitten möglich ist.

Diese Aufgabe ist erfindungsgemäß durch das Verdeck mit den Merkmalen des Patentanspruchs 1 gelöst.

Gemäß der Erfindung enden die Nähte zwischen dem zentralen Stoffzuschnitt und den seitlichen Stoffzuschnitten heckseitig mithin jeweils so, dass der jeweilige seitliche Stoffzuschnitt in Schließstellung des Verdecks in einem sich an die jeweilige Naht anschließenden Stoßbereich an dem zentralen Stoffzuschnitt in gespannter Weise anliegt und mit diesem unvernäht ist und beim Öffnen des Verdecks in den Stoßbereich von dem zentralen Stoffzuschnitt wegklappbar ist.

Im heckseitigen Stoßbereich zwischen dem zentralen Stoffzuschnitt und den jeweiligen seitlichen Stoffzuschnitten bzw. Segeln sind mithin durch die unvernähten Stoßbereiche Schlitze eingearbeitet, durch die längere unvernähte Randbereiche der seitlichen Stoffzuschnitte realisiert sind. Solche unvernähten Randbereiche werden in der Praxis häufig als stofflose Bereiche bezeichnet. Im geschlossenen Zustand des Verdecks sind durch die Spannung der seitlichen Stoffzuschnitte gegen den zentralen Stoffzuschnitt die unvernähten Bereiche im Wesentlichen nicht erkennbar.

Im Bereich der Innenverkleidung wird mithin durch deren erfindungsgemäße Ausbildung mehr Spiel zur Verfügung gestellt, um die Innenverkleidung beim Verschwenken der Verdeckelemente gegeneinander in eine Ablageposition zu bringen. Das Risiko eines Reißens der Stoffzuschnitte durch Stoffüberdehnungen in der Ablageposition des Verdecks wird durch die erfindungsgemäße Ausbildung minimiert, da in der Ablageposition ein Längenausgleich durch den verdeckten unvernähten Stoßbereich bzw. Schlitz bereitgestellt wird. Dieser Längenausgleich ist unabhängig von der Kinematik des Verdecks bzw. der Steuerung der seitlichen Stoffzuschnitte durch Seile.

Das Verdeck nach der Erfindung stellt insbesondere ein so genanntes RHT (retractable hardtop) dar, das mithin über mindestens zwei starre Verdeckelemente verfügt, die in Schließstellung des Verdecks in Fahrtrichtung hintereinander angeordnet sind und beim Öffnen des Verdecks gegeneinander zur Ablage in einem heckseitigen Verdeckablagekasten verschwenkbar sind.

Die Innenverkleidung bildet insbesondere eine die Verdeckelemente und die Verdeckkinematik gegenüber dem Fahrzeuginnenraum abgesehen von Fensterabschnitten komplett verkleidende Einrichtung, wobei selbstverständlich ein Heckfensterbereich eines heckseitigen Verdeckelementes ausgespart ist.

Bei einer zweckmäßigen Ausführungsform des Verdecks nach der Erfindung erfolgt das Wegklappen des jeweiligen seitlichen Stoffzuschnitts von dem zentralen Stoffzuschnitt mittels mindestens eines Zugseils, das an dem jeweiligen seitlichen Stoffzuschnitt heckseitig angebunden ist. Die Zugseile sind zweckmäßigerweise jeweils mit dem Verdeckgestänge bzw. der Verdeckkinematik verbunden, so dass das Wegklappen der seitlichen Stoffzuschnitte beim Öffnen des Verdecks allein durch die Bewegung der Verdeckgestänge ohne separate Antriebsaggregate erfolgt.

Die erfindungsgemäße Ausbildung der Innenverkleidung ist insbesondere vorteilhaft, wenn der in Schließstellung des Verdecks heckseitig angeordnete Bereich des jeweiligen seitlichen Stoffzuschnitts beim Öffnen des Verdecks in Richtung Fahrzeugbug und nach oben geklappt wird, und zwar insbesondere synchron mit dem Verschwenken eines hinteren starren Dachelements über ein vorderes starres Dachelement. Die unvernähten Stoßbereiche zwischen dem zentralen Stoffzuschnitt und den seitlichen Stoffzuschnitten stellen dann jeweils ein hinreichendes Spiel zum Wegklappen des jeweiligen seitlichen, segelartigen Stoffzuschnitts von dem zentralen Stoffzuschnitt bereit.

Der unvernähte Stoßbereich ist hinsichtlich seiner Länge zwechmäßigerweise an die bei dem jeweiligen Verdeck vorliegenden Bedingungen angepasst, hat aber beispielsweise eine Länge von etwa 50 mm bis 120 mm.

Weitere Vorteile und vorteilhafte Ausgestaltungen des Gegenstandes der Erfindung sind der Beschreibung, der Zeichnung und den Patentansprüchen entnehmbar.

Ein Ausführungsbeispiel einer Innenverkleidung eines Verdecks nach der Erfindung ist in der Zeichnung schematisch vereinfacht dargestellt und wird in der nachfolgenden Beschreibung näher erläutert. Es zeigt
- Fig. 1: eine perspektivische Draufsicht auf eine Innenverkleidung eines Cabriolet-Verdecks; und
- Fig. 2: eine Seitenansicht eines in Schließstellung des Verdecks unvernähten Stoßbereichs zwischen einem zentralen Stoffzuschnitt und einem seitlichen Stoffzuschnitt in dem Bereich II in Fig.1.

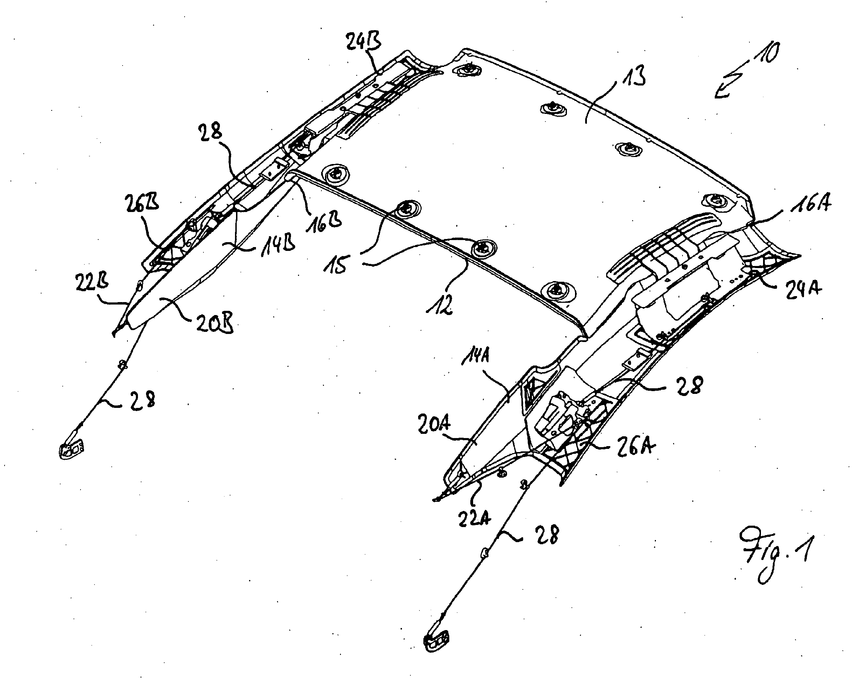

In Fig. 1 ist eine Verkleidung 10 eines ansonsten nicht näher dargestellten Verdecks eines Cabriolets dargestellt. Das Verdeck ist als so genanntes RHT (retractable hardtop) ausgebildet und umfasst in Schließstellung des Verdecks in Fahrtrichtung hintereinander angeordnete, starre Verdeckelemente, von denen ein hinteres mit einem Heckfenster ausgestattet ist.

Zum Antrieb weist das Verdeck beidseits jeweils ein durch Hydraulikzylinder oder dergleichen angetriebenes Verdeckgestänge auf, das mit den starren Verdeckelementen verbunden ist, welche im geöffneten Zustand des Verdecks in einem ebenfalls nicht näher dargestellten heckseitigen Verdeckablagekasten abgelegt sind. Im geschlossenen Zustand des Verdecks sind die Verdeckelemente sowie das Verdeckgestänge gegenüber dem Fahrzeuginnenraum mittels der Innenverkleidung 10 abgedeckt.

Die Innenverkleidung 10 umfasst einen flächigen, die Sichtfläche bildenden Stoffzuschnitt 12, der an der Unterseite eines plattenartigen Kunststoffträgers 13 aufgespannt ist, welcher über Rastverbindungen 15 mit dem vorderen, starren Verdeckelement verbunden werden kann. Der Stoffzuschnitt 12 und der Kunststoffträger 13 bilden zusammen ein Mittelteil der Innenverkleidung 10.

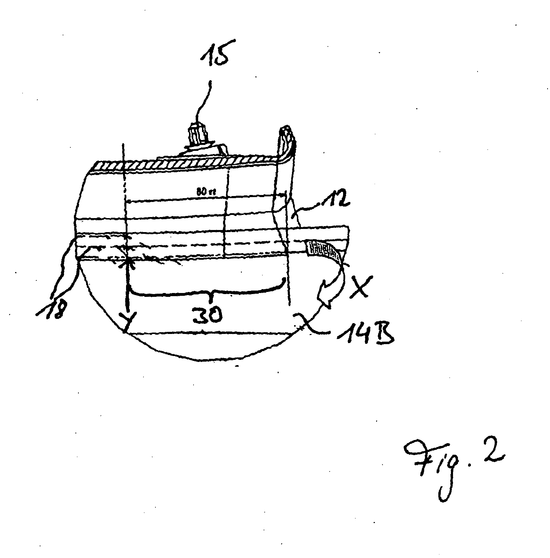

Des Weiteren umfasst die Innenverkleidung 10 zwei seitliche, segelartige Stoffzuschnitte 14A und 14B, die jeweils entlang eines Seitenrandes 16A bzw. 16B des zentralen Stoffzuschnitts 12 an diesen über eine sich in Fahrzeuglängsrichtung erstreckende Doppelnaht 18 unter Ausbildung einer so genannten Nahtfahne angebunden sind, wie Fig. 2 zu entnehmen ist.

Die seitlichen Stoffzuschnitte 14A und 14B dienen jeweils zur Verkleidung eines Seitenbereichs des vorderen starren Dachelements sowie des Verdeckgestänges gegenüber dem Fahrzeuginnenraum und weisen hierzu in dem neben dem zentralen Stoffzuschnitt 12 liegenden Bereich jeweils einen heckseitigen Abschnitt 20A bzw. 20B auf, der beim Öffnen des Verdecks, bei dem ein hinteres, starres Verdeckelement gemäß einem Pfeil X über das vordere, starre Verdeckelement geschwenkt wird, in Richtung Fahrzeugbug und nach oben und außen geklappt wird.

In Schließstellung werden die seitlichen Stoffzuschnitte 14A und 14B bzw. deren hintere fahnenartige Abschnitte 20A und 20B jeweils durch einen Seilzug 22A bzw. 22B gespannt und dadurch straff gehalten.

Um beim Öffnen des Verdecks die hier nicht näher dargestellte Verdeckkinematik bzw. das Verdeckgestänge nicht durch die seitlichen Stoffzuschnitte 14A und 14B in ihrer Bewegung zu behindern, weist die Innenverkleidung 10 des Weiteren beidseits jeweils zwei Klappelemente 24A und 26A bzw. 24B und 26B auf, die in Richtung Fahrzeuginnenraum vorgespannt sind und mittels Zugseilen 28, die an die Verdeckkinematik angebunden sind, in Schließstellung des Verdecks in Verkleidungsstellung gehalten sind.

Um beim Öffnen des Verdecks im Bereich der Innenverkleidung 10 die Stoffspannungen gering zu halten und damit ein Reißen der Stoffzuschnitte 12, 14A und 14B insbesondere in deren Nähten 18 zu verhindern, sind die Doppelnähte 18 zwischen dem zentralen Stoffzuschnitt und den seitlichen Stoffzuschnitten 14A und 14B heckseitig jeweils so an einer Stelle Y endend, dass der jeweilige seitliche Stoffzuschnitt 14A bzw. 14B in Schließstellung des Verdecks in einem sich an die jeweilige Naht 18 anschließenden Stoßbereich 30 an den zentralen Stoffzuschnitt 12 in gespannter Weise anliegt und unvernäht ist und beim Öffnen des Verdecks in den Stoßbereich 30 von dem zentralen Stoffzuschnitt wegklappbar ist. Der unvernähte Stoßbereich hat eine Länge von etwa 80 mm, wobei das Wegklappen des jeweiligen seitlichen Stoffzuschnitts 14A bzw. 14B von dem zentralen Stoffzuschnitt 12 mittels des Zugseils 22A bzw. 22B gesteuert wird, das an den jeweiligen Stoffzuschnitt 14A bzw. 14B heckseitig angebunden ist. In Schließstellung des Verdecks kann der unvernähte Stoßbereich 30 vom Fahrzeuginnenraum aus durchgriffen werden.

Beim Öffnen des Verdecks wird der in Schließstellung des Verdecks heckseitig angeordnete fahnenartige Bereich 20A bzw. 20B des jeweiligen seitlichen Stoffzuschnitts 14A bzw. 14B in Richtung Fahrzeugbug und gemäß dem Pfeil X nach außen und oben geklappt, mithin oberhalb des neben dem zentralen Stoffzuschnitt 12 angeordneten Bereichs des jeweiligen seitlichen Stoffzuschnitts 14A bzw. 14B abgelegt, ohne dass große Spannungen in die Stoffzuschnitte 12, 14A und 14B eingetragen würden. Es werden also eine hinreichende Flexibilität und der damit verbundene erforderliche Längenausgleich im Bereich der Innenverkleidung bereitgestellt.

### Bezugszeichen

- 10: Innenverkleidung
- 12: zentraler Stoffzuschnitt
- 13: Kunststoffplatte
- 14A, 14B: seitliche Stoffzuschnitte
- 15: Rastverbindungen
- 16A, 16B: Seitenrand
- 18: Doppelnaht
- 20A, 20B: heckseitiger Bereich
- 22A, 22B: Seilzug
- 24A, 24B: Klappe
- 26A, 26B: Klappe
- 28: Seilzug
- 30: unvernähter Stoßbereich

## Patentansprüche

1. Verdeck eines Cabriolets, mit mindestens einem starren Verdeckelement und einer Innenverkleidung (10), die zumindest das Verdeckelement innenseitig überdeckt und mindestens einen zentralen, in Schließstellung des Verdecks im Wesentlichen waagrecht angeordneten, an das Verdeckelement angebundenen Stoffzuschnitt (12) und zwei seitliche Stoffzuschnitte (14A, 14B) umfasst, die jeweils mit dem zentralen Stoffzuschnitt (12) entlang eines im Wesentlichen in Fahrzeuglängsrichtung verlaufenden Randes (16A, 16B) über eine Naht (18) verbunden sind und in Schließstellung des Verdecks mittels Seilen (22A, 22B) gespannt gehalten sind, **dadurch gekennzeichnet, dass** die Nähte (18) zwischen dem zentralen Stoffzuschnitt (12) und den seitlichen Stoffzuschnitten (14A, 14B) heckseitig jeweils so enden, dass der jeweilige seitliche Stoffzuschnitt (14A, 14B) in Schließstellung des Verdecks in einem sich an die jeweilige Naht (18) anschließenden Stoßbereich (30) an dem zentralen Stoffzuschnitt (12) in gespannter Weise anliegt und mit diesem unvernäht ist und beim Öffnen des Verdecks in dem Stoßbereich (30) von dem zentralen Stoffzuschnitt (12) wegklappbar ist.

2. Verdeck nach Anspruch 1, **dadurch gekennzeichnet, dass** das Wegklappen des jeweiligen seitlichen Stoffzuschnitts (12) von dem zentralen Stoffzuschnitt mittels mindestens eines Zugseils (22A, 22B) erfolgt, das an den jeweiligen seitlichen Stoffzuschnitt (14A, 14B) heckseitig angebunden ist.

3. Verdeck nach Anspruch 1 oder 2, **dadurch gekennzeichnet, dass** der in Schließstellung des Verdecks heckseitig angeordnete Bereich (20A; 20B) des jeweiligen seitlichen Stoffzuschnitts (14A, 14B) beim Öffnen des Verdecks in Richtung Fahrzeugbug und nach oben geklappt wird.

4. Verdeck nach einem der Ansprüche 1 bis 3, **dadurch gekennzeichnet, dass** der Stoßbereich (30) eine Länge von etwa 50 mm bis 120 mm hat.

5. Verdeck nach einem der Ansprüche 1 bis 4, **dadurch gekennzeichnet, dass** die seitlichen Stoffzuschnitte (14A, 14B) in Schließstellung des Verdecks jeweils einen seitlichen Dachelementbereich und ein Verdeckgestänge verkleiden.

## Claims

1. Folding top of a convertible, with at least one rigid folding-top element and with an inner trim (10) which covers at least the folding-top element on the inside and comprises at least one central cloth blank (12), arranged essentially horizontally in the closed position of the folding top and tied to the folding-top element, and two lateral cloth blanks (14A, 14B) which are connected via a seam (18) in each case to the central cloth blank (12) along a margin (16A, 16B) running essentially in the vehicle longitudinal direction and are held, tensioned, by means of cables (22A, 22B) in the closed position of the folding top, **characterized in that** the seams (18) between the central cloth blank (12) and the lateral cloth blanks (14A, 14B) in each case terminate on the tail side such that, in the closed position of the folding top, the respective lateral cloth blank (14A, 14B) bears in a tensioned manner against the central cloth blank (12) in an abutting region (30) adjacent to the respective seam (18) and is not stitched to the said central cloth blank (12) and, when the folding top is being opened, can be swung away from the central cloth blank (12) in the abutting region (30).

2. Folding top according to Claim 1, **characterized in that** the respective lateral cloth blank (12) is swung away from the central cloth blank by means of at least one pull cable (22A, 22B) which is tied to the respective lateral cloth blank (14A, 14B) on the tail side.

3. Folding top according to Claim 1 or 2, **characterized in that**, when the folding top is being opened, that region (20A, 20B) of the respective lateral cloth blank (14A, 14B) which is arranged on the tail side in the closed position of the folding top is swung in the direction of the front of the vehicle and upwards.

4. Folding top according to one of Claims 1 to 3, **characterized in that** the abutting region (30) has a length of about 50 mm to 120 mm.

5. Folding top according to one of Claims 1 to 4, **characterized in that**, in the closed position of the folding top, the lateral cloth blanks (14A, 14B) clad in each case a lateral roof element region and a folding-top linkage.

## Revendications

1. Capote de cabriolet, avec au moins un élément de capote rigide et un revêtement intérieur (10) qui recouvre au moins l'élément de capote côté intérieur et comprend au moins une coupe de tissu (12) centrale disposée en position fermée de la capote pour l'essentiel horizontalement et raccordée à l'élément de capote et deux coupes de tissu (14A, 14B) latérales reliées respectivement à la coupe de tissu (12) centrale le long d'un bord (16A, 16B) s'étendant pour l'essentiel dans la direction longitudinale du véhicule via une couture (18) et étant maintenue de façon tendue en position fermée de la capote à l'aide de câbles (22A, 22B), **caractérisée en ce que** les coutures (18) se terminent respectivement côté arrière, entre la coupe de tissu (12) centrale et les coupes de tissu (14A, 14B) latérales, de telle sorte que la coupe de tissu (14A, 14B) latérale repose de façon tendue en position fermée de la capote dans une zone amortissante (30) connexe à la couture (18) respective au niveau de la coupe de tissu (12) centrale, qu'elle n'est pas cousue à elle et peut être écartée lors de l'ouverture de la capote dans la zone amortissante (30) de la coupe de tissu (12) centrale.

2. Capote selon la revendication 1, **caractérisée en ce que** l'écartement de la coupe de tissu (12) latérale respective par rapport à la coupe de tissu centrale se produit à l'aide d'au moins un câble de traction (22A, 22B) raccordé côté arrière à la coupe de tissu (14A, 14B) latérale respective.

3. Capote selon la revendication 1 ou 2, **caractérisée en ce que** la zone (20A, 20B) disposée côté arrière dans la position fermée de la capote de la coupe de tissu (14A, 14B) latérale respective est rabattue lors de l'ouverture de la capote en direction de l'avant du véhicule et vers le haut.

4. Capote selon l'une quelconque des revendications 1 à 3, **caractérisée en ce que** la zone amortissante (30) a une longueur d' environ 50 mm à 120 mm.

5. Capote selon l'une quelconque des revendications 1 à 4, **caractérisée en ce que** les coupes de tissu (14A, 14B) latérales recouvrent en position fermée de la capote respectivement une zone d'élément de toit latérale et une barre de capote.
